(19) Europäisches Patentamt
European Patent Office
Office européen des brevets

(11) Numéro de publication : **0 030 887**
**B1**

(12) **FASCICULE DE BREVET EUROPÉEN**

(45) Date de publication du fascicule du brevet : **18.01.84**

(21) Numéro de dépôt : **80401744.0**

(22) Date de dépôt : **05.12.80**

(51) Int. Cl.³ : **C 07 C121/75**, C 07 C 69/743, A 01 N 53/00

(54) **Nouvelles imines dérivant d'esters d'acide 3-formyl cyclopropane-1-carboxyliques, leur préparation, leur application à la préparation des esters 3-vinyl substitué correspondants.**

(30) Priorité : **17.12.79 FR 7930843**

(43) Date de publication de la demande : **24.06.81 Bulletin 81/25**

(45) Mention de la délivrance du brevet : **18.01.84 Bulletin 84/03**

(84) Etats contractants désignés : **AT BE CH DE GB IT LI LU NL SE**

(56) Documents cités :
**EP-A- 0 005 882**
**EP-A- 0 021 520**
**FR-A- 2 211 454**

(73) Titulaire : **ROUSSEL-UCLAF**
**35, boulevard des Invalides**
**F-75007 Paris (FR)**

(72) Inventeur : **Martel, Jacques**
**15, rue Douvillez**
**F-93140 Bondy (FR)**
Inventeur : **Tessier, Jean**
**30, rue Jean Moulin**
**F-94300 Vincennes (FR)**
Inventeur : **Teche, André**
**15, rue Godot de Mauroy**
**F-75009 Paris (FR)**

(74) Mandataire : **Tonnellier, Marie-José et al**
**ROUSSEL-UCLAF 102, route de Noisy**
**F-93230 Romainville (FR)**

EP 0 030 887 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Nouvelles imines dérivant d'esters d'acide 3-formyl cyclopropane-1-carboxyliques, leur préparation, leur application à la préparation des esters 3-vinyl substitué correspondants

La présente invention concerne de nouvelles imines dérivant d'esters d'acides 3-formyl cyclopropane-1-carboxyliques, leur préparation, leur application à la préparation des esters 3-vinyl substitué correspondants.

L'invention a pour objet sous toutes leurs formes stéréoisomères, les composés de formule générale (I)

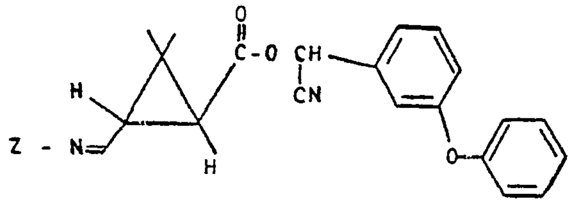

(cis ou trans, R, S ou RS)

dans laquelle Z représente le reste organique d'une amine primaire Z—$NH_2$ et dans laquelle la copule acide peut être de configuration cis ou trans, racémique ou optiquement active et la copule alcoolique de configuration R, S ou RS.

Le substituant Z des composés (I) peut être choisi parmi les restes d'amines aliphatiques primaires notamment parmi les restes de celles qui possèdent au moins 6 atomes de carbone. Le substituant Z peut également être choisi parmi les restes d'amines cycloaliphatiques possédant au moins 4 atomes de carbone. Le substituant Z est choisi de préférence parmi les restes d'amines primaires aromatiques, dont le groupement phényle peut être éventuellement substitué notamment par un ou plusieurs radicaux alcoyles, un ou plusieurs radicaux alcoxyles, un ou plusieurs atomes d'halogènes, un ou plusieurs groupements nitro, un ou plusieurs groupements —$SO_3H$. Le substituant Z peut aussi être choisi parmi les restes d'amines aromatiques polycycliques, éventuellement substituées et parmi les restes d'amines polycyclaniques, éventuellement du type endo ou spiro.

Dans les composés (I) de l'invention, le substituant Z est, de préférence, un reste d'aniline.

Parmi les composés de formule générale (I) ont peut citer notamment :

— le (1R, cis)2,2-diméthyl 3-(phényliminométhyl)cyclopropane-1-carboxylate de (RS) α-cyano 3-phénoxy benzyle

— le (1R, cis)2,2-diméthyl 3-(phényliminométhyl)cyclopropane-1-carboxylate de (S) α-cyano 3-phénoxy benzyle

— le (1R, trans)2,2-diméthyl 3-(phényliminométhyl)cyclopropane-1-carboxylate de (RS) α-cyano 3-phénoxy benzyle

— le (1R, trans)2,2-diméthyl 3-(phényliminométhyl)cyclopropane-1-carboxylate de (S) α-cyano 3-phénoxy benzyle.

L'invention a également pour objet un procédé de préparation des composés de formule générale (I), caractérisé en ce que l'on fait réagir un acide 2,2-diméthyl 3-formyl cyclopropane-1-carboxylique sous forme trans ($II_1$) ou sous forme de lactone cis d'un acide 2,2-diméthyl 3-dihydroxyméthyl cyclopropane-1-carboxylique ($II_2$)

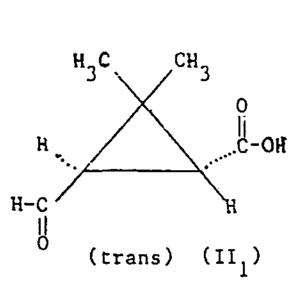

(trans) ($II_1$)

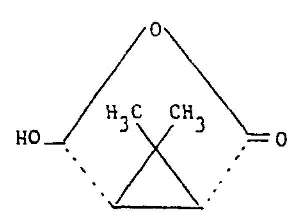

(cis) ($II_2$)

racémique ou optiquement actif, avec un réactif de déshydratation choisi dans le groupe constitué par le dicyclohexyl carbodiimide et le diisopropyl carbodiimide, en présence de pyridine ou de 4-diméthyl aminopyridine et au sein d'un solvant organique non polaire, pour obtenir respectivement le 2,2-diméthyl 3-formyl cyclopropane-1-carboxylate de (cyclohexylamino) (cyclohexylimino)méthyle ou le 2,2-diméthyl 3-formyl cyclopropane-1-carboxylate d'(isopropylamino) (isopropylimino)méthyle, dont les copules acides sont de structure trans ou cis, racémiques ou optiquement actives, soumet l'un ou l'autre de ces composés de l'action de l'alcool (RS) α-cyano 3-phénoxybenzylique (III)

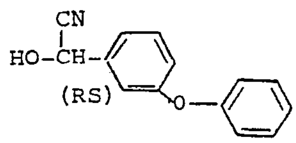

(III)

au sein d'un solvant non polaire, pour obtenir le 2,2-diméthyl 3-formyl cyclopropane-1-carboxylate de (RS) α-cyano 3-phénoxy benzyle correspondant (IV)

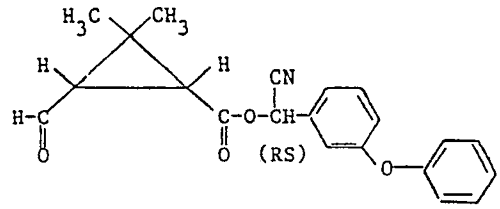

(IV).

de structure cis ou trans, racémique ou optiquement actif, soumet, au sein d'un solvant organique non polaire, cet ester à l'action d'une amine primaire de formule Z—$NH_2$, dans laquelle Z est défini comme précédemment, pour obtenir le 2,2-diméthyl 3-(Z-iminométhyl)cyclopropane-1-carboxylate de (RS) α-cyano 3-phénoxybenzyle ($I_A$) correspondant, que l'on soumet, si désiré, à l'action d'un agent basique au sein d'un solvant ou d'un mélange de solvants dans lequel l'ester d'alcool d'une des deux configurations (R) ou (S) est plus soluble que son diastéréoisomère, ce qui permet, après épimérisation du carbone asymétrique de la copule alcoolique d'obtenir, sous forme cristalline, le seul ester correspondant ($I_B$) ayant la configuration favorisée par l'insolubilité, c'est-à-dire soit le 2,2-diméthyl 3-(Z-iminométhyl)cyclopropane-1-carboxylate de (R) α-cyano 3-phénoxybenzyle, soit le 2,2-diméthyl 3-(Z-iminométhyl)-cyclopropane-1-carboxylate de (S) α-cyano 3-phénoxybenzyle, la copule acide des composés ($I_A$) ou ($I_B$) possédant la même configuration que celle du composé II de départ.

Dans le procédé de l'invention, le solvant organique non polaire au sein duquel on fait réagir d'une part le composé aldéhydique (II) et le réactif déshydratant et d'autre part le composé de condensation et l'alcool (III) est choisi de préférence dans le groupe constitué par les hydrocarbures aromatiques, les hydrocarbures aliphatiques, les hydrocarbures aliphatiques halogénés et le cyclohexane.

Dans le procédé de l'invention, l'amine primaire peut être choisie parmi celles dont les restes ont été énumérés précédemment.

Dans un mode opératoire préféré du procédé de l'invention, l'amine primaire que l'on fait réagir avec le composé (IV) est l'aniline.

Le solvant organique non polaire au sein duquel on fait réagir l'amine primaire et le composé (IV) est choisi, de préférence, dans le groupe constitué par les hydrocarbures aromatiques, les hydrocarbures aliphatiques, les hydrocarbures aliphatiques halogénés et le cyclohexane.

Dans le procédé de l'invention, l'agent basique à l'action duquel on soumet l'ester ($I_A$) d'alcool de configuration (RS) est choisi avantageusement dans le groupe constitué par l'ammoniaque, la triéthylamine, la diéthylamine, la morpholine, la pyrrolidine, la pipéridine, la diisopropylamine, l'éphédrine, la triéthylènediamine, la benzylamine, la n-butylamine, la sec.butylamine, l'hydroxyde de tétrabutylammonium, les résines échangeuses d'ions à caractère basique fort comportant des ammoniums quaternaires ou des amines, les amines à haut poids moléculaire et, utilisés en quantité catalytique, la soude, la potasse, les alcoolates alcalins, les amidures alcalins, les hydrures alcalins, le terbutylate de potassium et l'isopropylate de sodium.

Le solvant ou le mélange de solvants au sein duquel on fait réagir l'ester ($I_A$) d'alcool de configuration (RS) avec l'agent basique est choisi de préférence dans le groupe constitué par l'acétonitrile, les alcanols et les mélanges d'alcanols et d'éthers de pétrole.

Sans pour autant limiter le domaine de l'invention à des considérations d'ordre théorique, la société demanderesse pense que la transformation de l'ester ($I_A$) d'alcool de configuration (RS) en ester ($I_B$) d'alcool de configuration (S) ou de configuration (R) a lieu selon le mécanisme qui suit. Tout ou partie de la forme (R) ou (S) présente dans l'ester d'alcool ($I_A$) d'alcool (RS) est insolubilisée grâce à l'action du solvant ou du mélange de solvants insolubilisants utilisés. L'agent basique racémise ensuite l'ester d'alcool (R) ou d'alcool (S) résiduel pour former à nouveau de l'ester ($I_A$) d'alcool (RS). Le mécanisme se poursuit alors par insolubilisation sélective d'une des formes (R) ou (S), racémisation etc...

L'invention a également pour objet l'application des composés (I), dont la copule alcoolique présente une configuration (S) ou (R), (composés $I_B$), à la préparation, sous toutes leurs formes stéréoisomères, des composés de formule générale (V) :

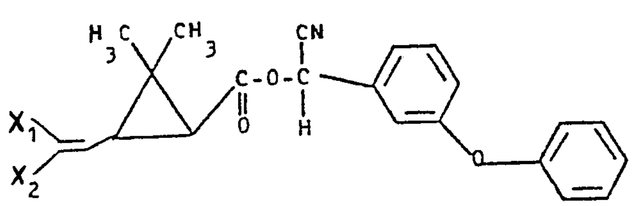

(V)

dans laquelle $X_1$ et $X_2$, identiques ou différents, représentent un radical alcoyle comportant de 1 à 4 atomes de carbone, un atome de fluor, de chlore ou de brome, ou représentent ensemble avec l'atome de carbone auquel ils sont liés, un homocycle carboné comportant de 3 à 7 atomes de carbone ou un hétérocycle de formule

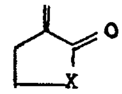

dans lequel X représente un atome d'oxygène ou de soufre, la copule acide des composés (V) pouvant être de structure cis ou trans, racémique ou optiquement active et la copule alcoolique étant de configuration (S) ou de configuration (R), caractérisée en ce que l'on soumet un composé de formule ($I_B$) à une hydrolyse à l'aide d'un agent acide, pour obtenir un composé de formule (VI)

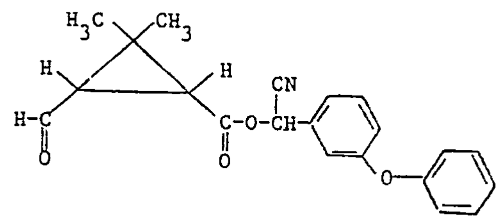

(VI)

de même configuration que le composé ($I_B$), produit de formule (VI) que l'on fait réagir au sein d'un solvant organique (Y), avec un phosphorane de formule (VII)

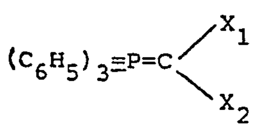

(VII)

résultant soit de l'action d'une base forte (B) sur un composé de formule (VIII)

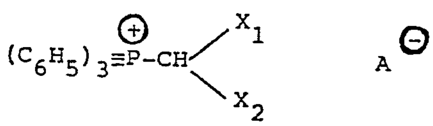

(VIII)

dans laquelle $A^{\ominus}$ représente un anion dérivé d'un acide minéral, soit lorsque $X_1$ et $X_2$ représentent un atome d'halogène, de l'action au sein d'un solvant (Y), d'une base forte (B) sur la triphényl phosphine et un haloforme convenable, pour obtenir le composé V désiré dont la copule acide a la même configuration que celle du composé ($I_B$) de départ.

Dans l'application selon l'invention,

— l'agent acide utilisé dans l'hydrolyse du composé ($I_B$) est choisi de préférence dans le groupe constitué par l'acide sulfurique, l'acide chlorhydrique, l'acide phosphorique et l'acide paratoluène sulfonique et l'hydrolyse du composé ($I_B$) est effectuée avantageusement en présence d'un solvant organique miscible à l'eau ;

— la base forte (B) utilisée est choisie de préférence dans le groupe constitué par les hydrures alcalins, les amidures alcalins, les alcoolates alcalins et le butyllithium ;

— le solvant (Y) est choisi avantageusement dans le groupe constitué par le diméthylformamide, le diméthylsulfoxyde, le tétrahydrofuranne, l'éther éthylique, l'éther monoéthylique du diéthylèneglycol et l'éther diéthylique du diéthylèneglyccol.

Pour effectuer la réaction de Wittig qui permet de fixer la chaîne latérale en position 3 de l'ester (V) on prépare le phosphorane (VII) par action de la base (B) sur un sel de phosphonium ou sur un mélange de triphényl phosphine et d'haloforme, au sein du solvant polaire (Y). On fait ensuite réagir en présence d'un excès de base, l'ylure formé sur le composé aldéhydique (VI).

Pour réaliser cette réaction de Wittig, l'ordre d'introduction des réactifs peut être modifié. On peut, par exemple, introduire la base en dernier lieu et réaliser ainsi, simultanément, la formation du phosphorane et sa condensation avec le composé aldéhydique (VI).

En résumé le procédé de préparation des composés (I) de l'invention et leur application décrite ci-dessus permet au départ d'acide 2,2-diméthyl 3-formyl cyclopropane-1-carboxylique sous forme trans ($II_1$), ou sous forme de lactone cis d'un acide 2,2-diméthyl 3-dihydroxy méthyl cyclopropane-1-carboxylique ($II_2$) et d'alcool (RS) α-cyano 3-phénoxybenzylique (III), d'obtenir en cinq étapes réactionnelles, les esters d'acide cyclopropane carboxylique d'alcool de configuration (R) ou (S) de formule (V), esters pouvant posséder en position 3 des chaînes latérales variées et qui comme on le sait, sont doués d'un grand pouvoir insecticide.

Comme le montrent notamment les exemples de la partie expérimentale, la synthèse des composés (I) selon l'invention, se prête bien à une industrialisation. Il est en effet possible d'effectuer plusieurs des stades réactionnels sans purification intermédiaire ou même sans isolement intermédiaire. Les réactifs mis en jeu dans la synthèse selon l'invention sont courants et sans danger.

La préparation des composés (IV) au départ de l'acide 2,2-diméthyl 3-formyl cyclopropane-1-carboxylique sous forme trans ($II_1$) ou sous forme de lactone cis d'un acide 2,2-diméthyl 3-dihydroxyméthyl cyclopropane-1-carboxylique ($II_2$), et d'un alcool III, présente un caractère original. En effet, un essai d'estérification du composé aldéhydique (II) et de l'alcool (RS) α-cyano 3-phénoxybenzylique (III) conduit à une condensation de l'alcool sur la fonction aldéhyde et non sur la fonction acide. Le passage par l'intermédiaire de composé du type 2,2-diméthyl 3-formyl cyclopropane-1-carboxylate de (cyclohexylamino) (cyclohexylimino)méthyle permet une estérification normale avec l'alcool (RS) α-cyano 3-phénoxybenzylique pour conduire au composé (IV) désiré. La préparation de composé du type (IV) par les méthodes classiques nécessite l'ozonolyse d'un chrysanthémate de (RS) α-cyano 3-phénoxybenzyle, ce qui présente un caractère moins industriel que la méthode de la présente invention.

La synthèse des composés (I) selon l'invention conduit, sans aucun risque d'échec, au composé (V) désiré, quelque soit la chaîne latérale en position 3 que possède cet ester (V). En effet, le processus d'épimérisation s'effectue, dans la synthèse de l'invention, sur le composé comportant un groupement imine ($I_A \rightarrow I_B$) et donc à ce stade un rendement satisfaisant. La synthèse selon l'invention est donc exempte de tous aléas et permet, pratiquement à coup sûr, d'obtenir un composé (V) d'une stéréochimie déterminée et d'une structure déterminée pour la chaîne latérale en position 3. Ceci est très précieux pour cette catégorie de composés dont l'activité biologique varie considérablement avec la structure stérique.

Les exemples suivants illustrent l'invention sans toutefois la limiter.

## Exemple 1

1R, cis 2,2-diméthyl 3-(2,2-dichlorovinyl)cyclopropane-1-carboxylate de (S) α-cyano 3-phénoxybenzyle.

### Stade A

1R, cis 2,2-diméthyl 3-formyl cyclopropane-1-carboxylate de (cyclohexylamino) (cyclohexylimino)méthyle.

Dans 400 $cm^3$ de chlorure de méthylène, on introduit 2 $cm^3$ de pyridine, 28,2 g de lactone de l'acide cis 2,2-diméthyl 3 S (dihydroxyméthyl)cyclopropane-1R-carboxylique, ajoute 41,2 g de dicyclohexyl carbodiimide, agite pendant 1 heure à 20°C et obtient une solution de 1R, cis 2,2-diméthyl 3-formyl cyclopropane-1-carboxylate de (cyclohexylamino) (cyclohexylimino)méthyle.

### Stade B

1R, cis 2,2-diméthyl 3-formyl cyclopropane-1-carboxylate de (RS) α-cyano 3-phénoxy benzyle.

A la solution précédemment obtenue on ajoute une solution de 28 g d'alcool (RS) α-cyano 3-phénoxy benzylique dans 150 $cm^3$ de chlorure de méthylène, agite pendant 16 heures à 20 °C, élimine, par filtration l'insoluble résiduel, lave la phase organique à l'eau, par une solution aqueuse 2N d'acide chlorhydrique, à l'eau, sèche, concentre à sec par distillation sur pression réduite, ajoute de l'éther éthylique au résidu, filtre, concentre à sec et obtient 59,1 g de 1R, cis 2,2-diméthyl 3-formyl cyclopropane-1-carboxylate de (RS) α-cyano 3-phénoxy benzyle brut, utilisé tel quel pour le stade suivant.

### Stade C

1R, cis 2,2-diméthyl 3-(phényliminométhyl)cyclopropane-1-carboxylate de (RS) α-cyano 3-phénoxy benzyle.

Dans 400 $cm^3$ de benzène on introduit 59,1 g du produit obtenu au stade B, 12,5 $cm^3$ d'aniline, porte au reflux pendant 3 heures et demi en éliminant l'eau formée par azéotropie, concentre à sec et obtient 77 g de 1R, cis 2,2-diméthyl 3-(phénylimino méthyl)cyclopropane-1-carboxylate de (RS) α-cyano 3-phénoxybenzyle brut utilisé tel quel pour le stade suivant.

### Stade D

1R, cis 2,2-diméthyl 3-(phénylimino méthyl)cyclopropane-1-carboxylate de (S) α-cyano 3-phénoxy benzyle.

Dans 300 $cm^3$ d'isopropanol et 5 $cm^3$ de triéthylamine on introduit les 77 g de 1R, cis 2,2-diméthyl 3-(phénylimmino méthyl)cyclopropane-1-carboxylate de (RS) α-cyano 3-phénoxy benzyle brut obtenu au stade C, amorce, agite pendant 60 heures à 20 °C, refroidit à 0 °C, isole par essorage les cristaux formés, sèche et obtient 17 g de 1R, cis 2,2-diméthyl 3-(phénylimino méthyl)cyclopropane-1-carboxylate de (S) α-cyano 3-phénoxy benzyle, F = 116 °C.

Stade E

1R, cis 2,2-diméthyl 3-formyl cyclopropane-1-carboxylate de (S) α-cyano 3-phénoxy benzyle.

Dans 100 $cm^3$ de solution aqueuse 2N d'acide chlorhydrique on introduit 5 g de 1R, cis 2,2-diméthyl 3-(phénylimino méthyl)cyclopropane-1-carboxylate de (S) α-cyano 3-phénoxybenzyle, agite pendant 4 heures et 30 minutes à 20 °C, extrait au chlorure de méthylène, lave à l'eau, concentre à sec par distillation sous pression réduite, chromatographie le résidu sur gel de silice en éluant au benzène et obtient 3,8 g de 1R, cis 2,2-diméthyl 3-formyl cyclopropane-1-carboxylate de (S) α-cyano 3-phénoxy benzyle, F = 104 °C.

Spectre de RMN (deutéro chloroforme)

— pics à 1,25-1,43 p.p.m. attribués aux hydrogènes des méthyles géminés.
— pics à 1,8-2,25 p.p.m. attribués aux hydrogènes en position 1 et 3 du cyclopropyle.
— pic à 6,4 p.p.m. attribué à l'hydrogène porté par le même carbone que le CN
— pics à 6,91-7,6 p.p.m. attribués aux hydrogènes des noyaux aromatiques
— pics à 9,8-9,9 p.p.m. attribués à l'hydrogène du formyle.

Stade F

1R, cis 2,2-diméthyl 3-(2,2-dichloro vinyl)cyclopropane-1-carboxylate de (S) α-cyano 3-phénoxy benzyle.

Dans 25 $cm^3$ d'heptane on introduit 3,93 g de triphényl phosphine broyée, 1,12 g de ter-butanol, 1,7 g de ter-butylate de potassium, refroidit à − 10 °C, ajoute 1,8 g de chloroforme, agite pendant 1 heure à + 10 °C, ajoute une solution de 3,49 g de 1R, cis 2,2-diméthyl 3-formyl cyclopropane-1-carboxylate de (S) α-cyano 3-phénoxy benzyle dans 20 $cm^3$ de tétrahydrofuranne, agite pendant 3 heures à + 10 °C, élimine par filtration l'insoluble formé, ajoute au filtrat 100 $cm^3$ d'une solution aqueuse saturée de phosphate monosodique, laisse reposer, décante, concentre la phase organique à sec par distillation sous pression réduite, chromatographie le résidu sur gel de silice en éluant avec un mélange de benzène et de cyclohexane (4/6), et obtient 3,4 g de 1R, cis 2,2-diméthyl 3-(2,2-dichlorovinyl)cyclopropane-1-carboxylate de (S) α-cyano 3-phénoxy benzyle, F = 60 °C.

Spectre de RMN (deutéro chloroforme)

— pics à 1,18-1,23 p.p.m. attribués aux hydrogènes des méthyles géminés
— pics à 1,8-1,93 p.p.m. et à 2,0-2,15-2,30 p.p.m. attribués aux hydrogènes en position 1 et 3 du cyclopropane
— pics à 6,10-6,20 p.p.m. attribués à l'hydrogène éthylénique
— pic à 6,33 p.p.m. attribué à l'hydrogène porté par le même carbone que le groupement CN
— pics à 6,83-7,50 p.p.m. attribués aux hydrogènes des noyaux aromatiques.

Exemple 2

1R, trans 2,2-diméthyl 3-(2,2-dichloro vinyl)cyclopropane-1-carboxylate de (S) α-cyano 3-phénoxy benzyle.

Stade A

1R, trans 2,2-diméthyl 3-formyl cyclopropane-1-carboxylate de (cyclohexylamino) (cyclohexylimino) méthyle.

Dans 300 $cm^3$ de chlorure de méthylène on introduit 2 $cm^3$ de pyridine, 28,4 g d'acide 1R, trans 2,2-diméthyl 3-formyl cyclopropane-1-carboxylique, ajoute 41,2 g de dicyclohexyl carbodiimide, agite pendant 1 heure à 20 °C et obtient une suspension de 1R, trans 2,2-diméthyl 3-formyl cyclopropane-1-carboxylate de (cyclohexylamino) (cyclohexylimino)méthyle.

Stade B

1R, trans 2,2-diméthyl 3-formyl cyclopropane-1-carboxylate de (RS) α-cyano 3-phénoxy benzyle.

A la suspension précédemment obtenue on ajoute 30 g d'alcool RS α-cyano 3-phénoxy benzylique,

agite pendant 16 heures à 20 °C, élimine par filtration l'insoluble formé, concentre le filtrat à sec par distillation sous pression réduite, chromatographie le résidu du gel de silice en éluant par un mélange de benzène et d'acétate d'éthyle (95/5) et obtient 38 g de 1R, trans 2,2-diméthyl 3-formyl cyclopropane-1-carboxylate de (RS) α-cyano 3-phénoxy benzyle.

Spectre de RMN (deutéro chloroforme)

— pics à 1,27-1,29-1,30-1,36 p.p.m. attribués aux hydrogènes des méthyles géminés
— pics à 2,16-2,50 p.p.m. attribués aux hydrogènes en fonction 1 et 3 du cyclopropyle
— pic à 6,30 p.p.m. attribué à l'hydrogène porté par le même carbone que le groupement —CN
— pics à 6,83-7,60 p.p.m. attribués aux hydrogènes des noyaux aromatiques.

Stade C

1R, trans 2,2-diméthyl 3-(phénylimino méthyl)cyclopropane-1-carboxylate de (RS) α-cyano 3-phénoxy benzyle.

Dans 100 $cm^3$ d'éther de pétrole (eb 35-70 °C), on introduit 4 g d'aniline, 10 g de 1R, trans 2,2-diméthyl 3-formyl cyclopropane-1-carboxylate de (RS) α-cyano 3-phénoxy benzyle, obtenu au stade B précédent, porte le mélange réactionnel au reflux en éliminant, par azéotropie, l'eau formée, concentre à sec par distillation sous pression réduite et obtient 14,4 g de 1R, trans 2,2-diméthyl 3-(phénylimino méthyl)cyclopropane-1-carboxylate de (RS) α-cyano 3-phénoxy benzyle brut utilisé, tel quel pour le stade suivant.

Stade D

1R, trans 2,2-diméthyl 3-(phénylimino méthyl)cyclopropane-1-carboxylate de (S) α-cyano 3-phénoxy benzyle.

Dans 40 $cm^3$ d'isopropanol on introduit 1 $cm^3$ de triéthylamine, 14,4 g de 1R, trans 2,2-diméthyl 3-(phénylimino méthyl)cyclopropane-1-carboxylate de (RS) α-cyano 3-phénoxy benzyle obtenus au stade C précédent, amorce, agite à 20 °C pendant 96 heures, refroidit à – 10 °C, isole, par essorage le précipité formé, le sèche et obtient 8,7 g de 1R, trans 2,2-diméthyl 3-(phényliminométhyl) cyclopropane-1-carboxylate de (S) α-cyano 3-phénoxy benzyle, F = 94 °C.

Spectre de RMN (deutéro chloroforme)

— pic à 1,32 p.p.m. attribué aux hydrogènes des méthyles géminés
— pics à 2,30-2,65 p.p.m. attribués aux hydrogènes en position 1 et 3 du cylopropane
— pic à 6,40 p.p.m. attribué à l'hydrogène porté par le même carbone que le —CN
— pics à 7,66-7,76 p.p.m. attribués à l'hydrogène éthylénique.

Spectre IR (chloroforme)

— absorption à 1 740 $cm^{-1}$, attribuée au carbonyle de l'ester
— absorption à 1 640 $cm^{-1}$, attribuée au groupement —CN conjugué
— absorptions à 1 497 $cm^{-1}$ et 1 487 $cm^{-1}$ attribuées aux noyaux aromatiques
— absorption à 1 382 $cm^{-1}$ attribuée aux méthyles géminés
— absorption à 692 $cm^{-1}$ attribuée au phényle.

Stade E

1R, trans 2,2-diméthyl 3-formyl cyclopropane-1-carboxylate de (S) α-cyano 3-phénoxy benzyle.

Dans 100 $cm^3$ de solution aqueuse 2N d'acide chlorhydrique on introduit 5 g de 1R, trans 2,2-diméthyl 3-(phénylimino méthyl)cyclopropane-1-carboxylate de (S) α-cyano 3-phénoxy benzyle, agite pendant 2 heures et 30 minutes à 20 °C, isole par essorage, le précipité formé, le dissout dans le chlorure de méthylène, sèche la solution, la concentre à sec par distillation sous pression réduite et obtient 4,2 g de 1R, trans 2,2-diméthyl 3-formyl cyclopropane-1-carboxylate de (S) α-cyano 3-phénoxy benzyle, F = 70 °C.

Spectre de RMN (deutéro chloroforme)

— pics à 1,26-1,29 p.p.m. attribués aux hydrogènes des méthyles géminés
— pic à 2,53 p.p.m. attribué aux hydrogènes en position 1 et 3 du cyclopropane

— pic à 6,4 p.p.m. attribué à l'hydrogène porté par le même carbone que le groupement —CN
— pics à 6,90-7,50 p.p.m. attribués aux hydrogènes des noyaux aromatiques
— pics à 9,76-9,80 p.p.m. attribués à l'hydrogène du formyle

Stade F

1R, trans 2,2-diméthyl 3-(2,2-dichlorovinyl) cyclopropane-1-carboxylate de (S) α-cyano 3-phénoxy benzyle.

Dans 25 $cm^3$ d'heptane on introduit 3,93 g de triphényl phosphine, 1,12 g de tert-butanol, 1,7 g de tert-butylate de potassium, ajoute à − 10 °C, 1,8 g de chloroforme, agite pendant 1 heure à − 15 °C, introduit à − 20 °C, une solution de 3,5 g de 1R, trans 2,2-diméthyl 3-formyl cyclopropane-1-carboxylate de (S) α-cyano 3-phénoxy benzyle dans 10 $cm^3$ de tétrahydrofuranne, agite pendant 2 heures et 30 minutes à − 10 °C, verse le mélange réactionnel sur une solution aqueuse de phosphate monosodique, extrait à l'éther éthylique, concentre à sec par distillation sous pression réduite et chromatographie le résidu sur gel de silice en éluant par le benzène.

On obtient 3,4 g de 1R, trans 2,2-diméthyl 3-(2,2-dichlorovinyl)cyclopropane-1-carboxylate de (S) α-cyano 3-phénoxy benzyle.

Spectre de RMN (deutéro chloroforme)
— pics à 1,18-1,24 p.p.m. attribués aux hydrogènes des méthyles géminés
— pics à 1,60-1,70 p.p.m. attribués à l'hydrogène en position 1 du cyclopropane
— pics à 2,20-2,29-2,30-2,40 p.p.m. attribués à l'hydrogène en position 3 du cyclopropane
— pics à 5,58-5,70 p.p.m. attribués à l'hydrogène éthylénique
— pic à 6,43 p.p.m. attribué à l'hydrogène porté par le même carbone que le groupement —CN
— pics à 6,9-7,60 p.p.m. attribués aux hydrogènes des noyaux aromatiques

Exemple 3

1R, trans 2,2-diméthyl 3-/(E + Z) 2-chloro 2-bromo éthényl/cyclopropane-1-carboxylate de (S) α-cyano 3-phénoxy benzyle.

Dans 130 $cm^3$ d'heptane on introduit 25 g de triphényl phosphine broyée, 9 g de tert butylate de potassium, 6 g de tert butanol, agite pendant 30 minutes à température ambiante, ajoute, à 0 °C, une solution de 17 g de chloro dibromo méthane dans 40 $cm^3$ d'heptane, agite pendant 45 minutes à 0° + 5°, introduit à 0 °C, une solution de 17,6 g de 1R, trans 2,2-diméthyl 3-formyl cyclopropane-1-carboxylate de (S) α-cyano 3-phénoxy benzyle dans 80 $cm^3$ de tétrahydrofuranne, agite pendant 30 minutes à + 5 °C, verse le mélange réactionnel sur une solution aqueuse N d'acide sulfurique, extrait à l'acétate d'éthyle, lave à l'eau, concentre à sec par distillation sous pression réduite, chromatographie le résidu sur gel de silice en éluant par un mélange de benzène et de cyclohexane (7/3), et obtient 16,5 g de 1R, trans 2,2-diméthyl-3-/(E + Z) 2-chloro 2-bromo éthényl/cyclopropane-1-carboxylate de (S) α-cyano 3-phénoxybenzyle $/\alpha/_D = +31°$ (c = 0,6 %, benzène)

Spectre infrarouge (chloroforme)

— absorption à 1 738 $cm^{-1}$ attribuée au carbonyle de l'ester
— absorptions à 1 585, 1 485 $cm^{-1}$ attribuées aux noyaux aromatiques
— absorptions à 1 351, 1 381 $cm^{-1}$ attribuées aux méthyles géminés

Spectre de RMN (deutéro chloroforme)

— pics à 1,16-1,20 p.p.m. attribués aux hydrogènes des méthyles géminés
— pics à 1,62-1,70 p.p.m. attribués à l'hydrogène en position 1 du cyclopropane
— pics à 5,77-5,90-5,80-5,95 p.p.m. attribués à l'hydrogène éthylénique
— pic à 6,38 p.p.m. attribué à l'hydrogène porté par le même carbone que le groupement —CN
— pics à 6,91-7,50 p.p.m. attribués aux hydrogènes des noyaux aromatiques.

**Revendications** (pour les Etats contractants : BE, CH, DE, GB, IT, LI, LU, NL, SE)

1. Sous toutes leurs formes stéréoisomères, les composés de formule générale (I)

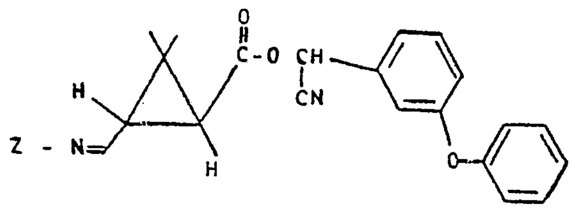

cis ou trans R, S ou RS
dans laquelle Z représente le reste organique d'une amine primaire Z—$NH_2$ et dans laquelle la copule acide peut être de configuration cis ou trans, racémique ou optiquement active et la copule alcoolique de configuration R, S ou RS.

2. Les composés de formule générale I, tels que définis à la revendication 1, dont les noms suivent :

— Le (1R, cis)2,2-diméthyl 3-(phényliminométhyl)cyclopropane-1-carboxylate de (RS) α-cyano 3-phénoxy benzyle,
— Le (1R, cis)2,2-diméthyl 3-(phényliminométhyl)cyclopropane-1-carboxylate de (S) α-cyano 3-phénoxy benzyle,
— Le (1R, trans)2,2-diméthyl 3-(phényliminométhyl) cyclopropane-1-carboxylate de (RS) α-cyano 3-phénoxy benzyle,
— Le (1R, trans)2,2-diméthyl 3-(phényliminométhyl) cyclopropane-1-carboxylate de (S) α-cyano 3-phénoxy benzyle.

3. Procédé de préparation des composés de formule générale (I) tels que définis à la revendication 1, caractérisé en ce que l'on fait réagir un acide 2,2-diméthyl 3-formyl cyclopropane-1-carboxylique sous forme trans ($II_1$) ou sous forme de lactone cis d'un acide 2,2-diméthyl 3-dihydroxyméthyl cyclopropane-1-carboxylique ($II_2$)

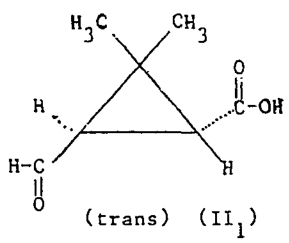
(trans) ($II_1$)

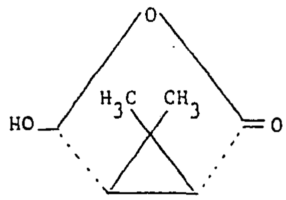
(cis) ($II_2$)

racémique ou optiquement actif, avec un réactif de déshydratation choisi dans le groupe constitué par le dicyclohexyl carbodiimide et le diisopropyl carbodiimide, en présence de pyridine ou de 4-diméthyl aminopyridine, et au sein d'un solvant organique non polaire, pour obtenir respectivement le 2,2-diméthyl 3-formyl cyclopropane-1-carboxylate de (cyclohexylamino) (cyclohexylimino)méthyle ou le 2,2-diméthyl 3-formyl cyclopropane-1-carboxylate d'(isopropylamino) (isopropylimino)méthyle dont les copules acides sont de structure trans ou cis, racémiques ou optiquement actives, soumet l'un de ces composés à l'action de l'alcool (RS) α-cyano 3-phénoxybenzylique (III)

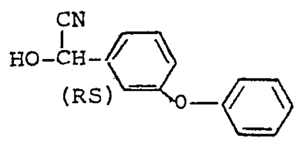
(III)

au sein d'un solvant non polaire, pour obtenir le 2,2-diméthyl 3-formyl cyclopropane-1-carboxylate de (RS) α-cyano 3-phénoxybenzyle correspondant (IV)

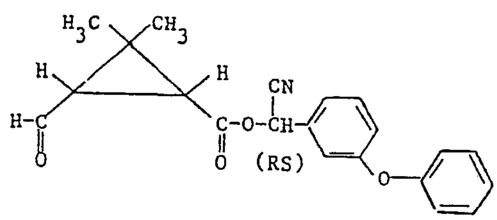
(IV)

de structure cis ou trans, racémique ou optiquement actif, soumet au sein d'un solvant organique non polaire, cet ester à l'action d'une amine primaire de formule Z—$NH_2$, dans laquelle Z est défini comme à la revendication 1, pour obtenir le 2,2-diméthyl 3-(Z-iminométhyl)cyclopropane-1-carboxylate de (RS) α-cyano 3-phénoxybenzyle ($I_A$) correspondant, que l'on soumet, si désiré, à l'action d'un agent basique au sein d'un solvant ou d'un mélange de solvants dans lequel l'ester d'alcool d'une des deux configurations (R) ou (S) est plus soluble que son diastéréoisomère, ce qui permet, après épimérisation du carbone asymétrique de la copule alcoolique d'obtenir, sous forme cristalline, le seul ester correspondant ($I_B$) ayant la configuration favorisée par l'insolubilité, c'est-à-dire soit le 2,2-diméthyl 3-(Z-iminométhyl)cyclopropane-1-carboxylate de (R) α-cyano 3-phénoxybenzyle, soit le 2,2-diméthyl 3-(Z-iminométhyl)cyclopropane-1-carboxylate de (S) α-cyano 3-phénoxybenzyle, la copule acide des composés ($I_A$) ou ($I_B$) possédant la même configuration que celle du composé II de départ.

4. Procédé selon la revendication 3, caractérisé en ce que le solvant organique non polaire au sein duquel on fait réagir d'une part le composé aldéhydique (II) et le réactif déshydratant et, d'autre part le composé de condensation et l'alcool III est choisi dans le groupe constitué par les hydrocarbures aromatiques, les hydrocarbures aliphatiques, les hydrocarbures aliphatiques halogénés et le cyclohexane.

5. Procédé selon la revendication 3 ou 4, caractérisé en ce que l'amine primaire que l'on fait réagir avec le composé (IV) est l'aniline.

6. Procédé selon l'une quelconque des revendications 3 à 5, caractérisé en ce que le solvant organique non polaire au sein duquel on fait réagir l'amine primaire et le composé (IV) est choisi dans le groupe constitué par les hydrocarbures aromatiques, les hydrocarbures aliphatiques, les hydrocarbures aliphatiques halogénés et le cyclohexane.

7. Procédé selon l'une quelconque des revendications 3 à 6, caractérisé en ce que l'agent basique à l'action duquel on soumet l'ester ($I_A$) d'alcool de configuration (RS) est choisi dans le groupe constitué par l'ammoniaque, la triéthylamine, la diéthylamine, la morpholine, la pyrrolidine, la pipéridine, la diisopropylamine, l'éphédrine, la triéthylènediamine, la benzylamine, la n-butylamine, la sec.butylamine, l'hydroxyde de tétrabutylammonium, les résines échangeuses d'ions à caractère basique fort comportant des ammoniums quaternaires ou des amines, les amines à haut poids moléculaire et, utilisés en quantité catalytique, la soude, la potasse, les alcoolates alcalins, les amidures alcalins, les hydrures alcalins, le terbutylate de potassium et l'isopropylate de sodium.

8. Procédé selon l'une quelconque des revendications 3 à 7, caractérisé en ce que le solvant ou le mélange de solvants au sein duquel on fait réagir l'ester ($I_A$) d'alcool de configuration (RS) avec l'agent basique est choisi dans le groupe constitué par l'acétonitrile, les alcanols et les mélanges d'alcanols et d'éthers de pétrole.

9. Application des composés (I), tels que définis à la revendication 1, dont la copule alcoolique présente une configuration (S) ou (R), (composés $I_B$), à la préparation, sous toutes leurs formes stéréoisomères, des composés de formule générale (V)

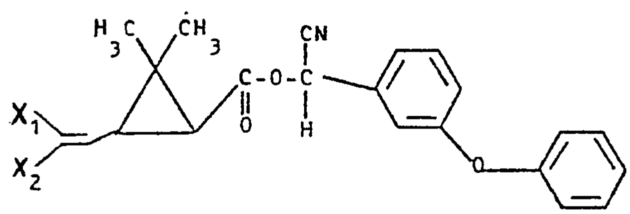

(V)

dans laquelle $X_1$ et $X_2$ identiques ou différents représentent un radical alcoyle comportant de 1 à 4 atomes de carbone, un atome de fluor, de chlore ou de brome, ou représentent ensemble avec l'atome de carbone auquel ils sont liés, un homocycle carboné comportant de 3 à 7 atomes de carbone ou un hétérocycle de formule

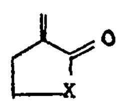

dans lequel X représente un atome d'oxygène ou de soufre, la copule acide des composés (V) pouvant être de structure cis ou trans, racémique ou optiquement active et la copule alcoolique étant de configuration (S), ou de configuration (R), caractérisée en ce que l'on soumet le composé de formule ($I_B$) à une hydrolyse à l'aide d'un agent acide, pour obtenir un composé de formule (VI)

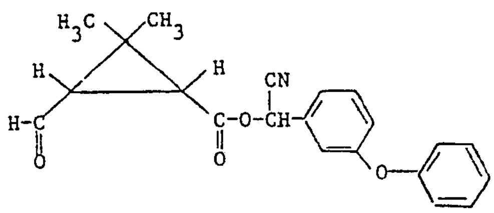

(VI)

de même configuration que le composé ($I_B$) produit de formule VI, que l'on fait réagir au sein d'un solvant organique (Y), avec un phosphorane de formule (VII)

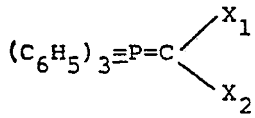

(VII)

résultant soit de l'action d'une base forte (B) sur un composé de formule (VIII)

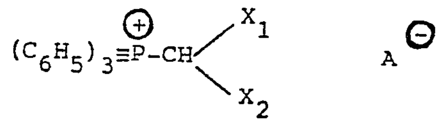

(VIII)

dans laquelle $A^{\ominus}$ représente un anion dérivé d'un acide minéral, soit lorsque $X_1$ et $X_2$ représentent un atome d'halogène, de l'action au sein d'un solvant (Y) d'une base forte (B) sur la triphényl phosphine et un haloforme convenable, pour obtenir le composé V désiré dont la copule acide à la même configuration que celle du composé ($I_B$) de départ.

10. Application selon la revendication 9, caractérisé en ce que l'agent acide utilisé dans l'hydrolyse du composé ($I_B$) est choisi dans le groupe constitué par l'acide sulfurique, l'acide chlorhydrique, l'acide phosphorique et l'acide paratoluène sulfonique.

11. Application selon la revendication 9 ou 10, caractérisée en ce que l'hydrolyse du composé ($I_B$) est effectuée en présence d'un solvant organique miscible à l'eau.

12. Application selon la revendication 9, caractérisée en ce que la base forte (B) est chosie dans le groupe constitué par les hydrures alcalins, les amidures alcalins, les alcoolates alcalins et le butyllithium.

13. Application selon la revendication 9, caractérisée en ce que le solvant (Y) est choisi dans le groupe constitué par le diméthylformamide, le diméthylsulfoxyde, le tétrahydrofuranne, l'éther éthylique, l'éther monoéthylique du diéthylèneglycol et l'éther diéthylique du diéthylèneglycol.

**Revendications** (pour l'Etat contractant AT)

1. Procédé de préparation des composés de formule générale (V)

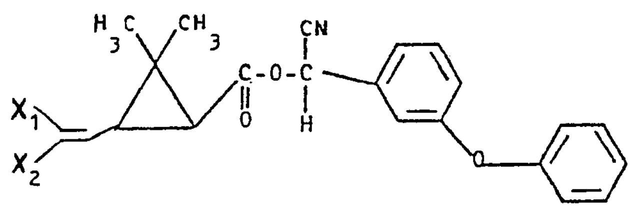

(V)

dans laquelle $X_1$ et $X_2$ identiques ou différents représentent un radical alcoyle comportant de 1 à 4 atomes de carbone, un atome de fluor, de chlore ou de brome, ou représentent ensemble avec l'atome de carbone auquel ils sont liés, un homocycle carboné comportant de 3 à 7 atomes de carbone ou un hétérocycle de formule

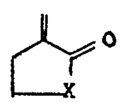

dans lequel X représente un atome d'oxygène ou de soufre, la copule acide des composés (V) pouvant être de structure cis ou trans, racémique ou optiquement active et la copule alcoolique étant de configuration (S), ou de configuration (R), caractérisé en ce que l'on fait réagir un acide 2,2-diméthyl 3-formyl cyclopropane-1-carboxylique sous forme trans ($II_1$) ou sous forme de lactone cis d'un acide 2,2-diméthyl 3-dihydroxyméthyl cyclopropane-1-carboxylique ($II_2$)

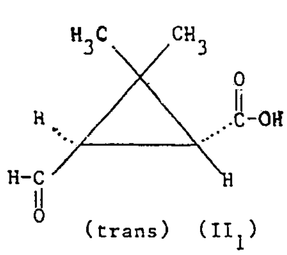

(trans) ($II_1$)

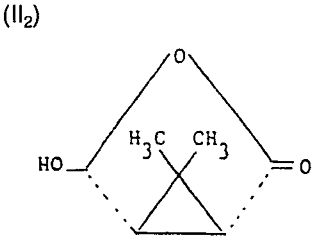

(cis) ($II_2$)

racémique ou optiquement actif, avec un réactif de déshydratation choisi dans le groupe constitué par le dicyclohexyl carbodiimide et le diisopropyl carbodiimide, en présence de pyridine ou de 4-diméthyl aminopyridine, et au sein d'un solvant organique non polaire, pour obtenir respectivement le 2,2-diméthyl 3-formyl cyclopropane-1-carboxylate de (cyclohexylamino) (cyclohexylimino)méthyle ou le 2,2-diméthyl 3-formyl cyclopropane-1-carboxylate d'(isopropylamino) (isopropylimino)méthyle dont les copules acides sont de structure trans ou cis, racémiques ou optiquement actives, soumet l'un de ces composés à l'action de l'alcool (RS) α-cyano 3-phénoxybenzylique (III)

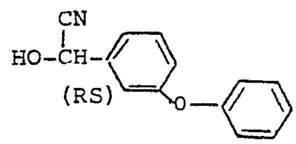

(III)

au sein d'un solvant non polaire, pour obtenir le 2,2-diméthyl 3-formyl cyclopropane-1-carboxylate de (RS) α-cyano 3-phénoxybenzyle correspondant (IV)

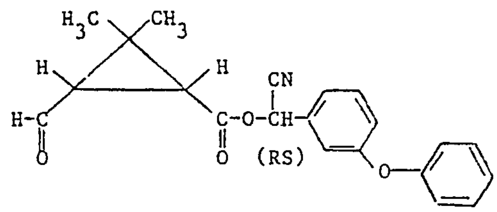

(IV)

de structure cis ou trans, racémique ou optiquement actif, soumet au sein d'un solvant organique non polaire, cet ester à l'action d'une amine primaire de formule Z—$NH_2$, dans laquelle Z représente le reste organique d'une amine primaire Z—$NH_2$, pour obtenir le 2,2-diméthyl 3-(Z-iminométhyl)cyclopropane-1-carboxylate de (RS) α-cyano 3-phénoxybenzyle ($I_A$) correspondant, que l'on soumet à l'action d'un agent basique au sein d'un solvant ou d'un mélange de solvants dans lequel l'ester d'alcool d'une des deux configurations (R) ou (S) est plus soluble que son diastéréoisomère, ce qui permet, après épimérisation du carbone asymétrique de la copule alcoolique d'obtenir, sous forme cristalline, le seul ester correspondant ($I_B$) ayant la configuration favorisée par l'insolubilité, c'est-à-dire soit le 2,2-diméthyl 3-(Z-iminométhyl)cyclopropane-1-carboxylate de (R) α-cyano 3-phénoxybenzyle, soit le 2,2-diméthyl 3-(Z-iminométhyl)cyclopropane-1-carboxylate de (S) α-cyano 3-phénoxybenzyle, la copule acide des composés ($I_A$) ou ($I_B$) possédant la même configuration que celle du composé II de départ, puis soumet le composé de formule ($I_B$) à une hydrolyse à l'aide d'un agent acide, pour obtenir un composé de formule (VI)

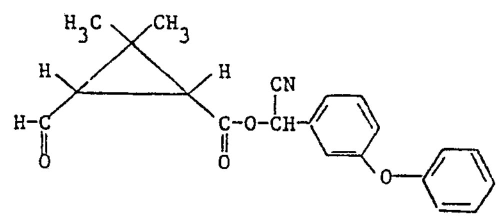

(VI)

de même configuration que le composé ($I_B$) produit de formule VI, que l'on fait réagir au sein d'un solvant organique (Y), avec un phosphorane de formule (VII)

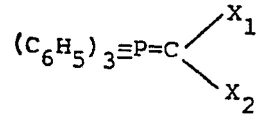

(VII)

résultant soit de l'action d'une base forte (B) sur un composé de formule (VIII)

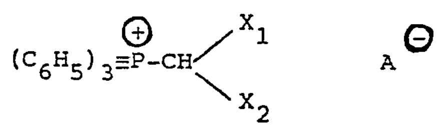

(VIII)

dans laquelle $A^{\ominus}$ représente un anion dérivé d'un acide minéral, soit lorsque $X_1$ et $X_2$ représentent un atome d'halogène, de l'action au sein d'un solvant (Y) d'une base forte (B) sur la triphényl phosphine et

un haloforme convenable, pour obtenir le composé V désiré dont la copule acide à la même configuration que celle du composé ($I_B$) de départ.

2. Procédé selon la revendication 1, caractérisé en ce que le solvant organique non polaire au sein duquel on fait réagir d'une part le composé aldéhydique (II) et le réactif déshydratant et, d'autre part le composé de condensation et l'alcool III est choisi dans le groupe constitué par les hydrocarbures aromatiques, les hydrocarbures aliphatiques, les hydrocarbures aliphatiques halogénés et le cyclohexane.

3. Procédé selon la revendication 1 ou 2, caractérisé en ce que l'amine primaire que l'on fait réagir avec le composé (IV) est l'aniline.

4. Procédé selon l'une quelconque des revendications 1 à 3, caractérisé en ce que le solvant organique non polaire au sein duquel on fait réagir l'amine primaire et le composé (IV) est choisi dans le groupe constitué par les hydrocarbures aromatiques, les hydrocarbures aliphatiques, les hydrocarbures aliphatiques halogénés et le cyclohexane.

5. Procédé selon l'une quelconque des revendications 1 à 4, caractérisé en ce que l'agent basique à l'action duquel on soumet l'ester ($I_A$) d'alcool de configuration (RS) est choisi dans le groupe constitué par l'ammoniaque, la triéthylamine, la diéthylamine, la morpholine, la pyrrolidine, la pipéridine, la diisopropylamine, l'éphédrine, la triéthylènediamine, la benzylamine, la n-butylamine, la sec.butylamine, l'hydroxyde de tétrabutylammonium, les résines échangeuses d'ions à caractère basique fort comportant des ammoniums quaternaires ou des amines, les amines à haut poids moléculaire et, utilisés en quantité catalytique, la soude, la potasse, les alcoolates alcalins, les amidures alcalins, les hydrures alcalins, le terbutylate de potassium et l'isopropylate de sodium.

6. Procédé selon l'une quelconque des revendications 1 à 5, caractérisé en ce que le solvant ou le mélange de solvants au sein duquel on fait réagir l'ester ($I_A$) d'alcool de configuration (RS) avec l'agent basique est choisi dans le groupe constitué par l'acétonitrile, les alcanols et les mélanges d'alcanols et d'éthers de pétrole.

7. Procédé selon l'une quelconque des revendications 1 à 6, caractérisé en ce que l'agent acide utilisé dans l'hydrolyse du composé ($I_B$) est choisi dans le groupe constitué par l'acide sulfurique, l'acide chlorhydrique, l'acide phosphorique et l'acide paratoluène sulfonique.

8. Procédé selon l'une quelconque des revendications 1 à 7, caractérisée en ce que l'hydrolyse du composé ($I_B$) est effectuée en présence d'un solvant organique miscible à l'eau.

9. Procédé selon l'une quelconque des revendications 1 à 8, caractérisée en ce que la base forte (B) est choisie dans le groupe constitué par les hydrures alcalins, les amidures alcalins, les alcoolates alcalins et le butyllithium.

10. Application selon l'une quelconque des revendications 1 à 9, caractérisée en ce que le solvant (Y) est choisi dans le groupe constitué par le diméthylformamide, le diméthylsulfoxyde, le tétrahydrofuranne, l'éther éthylique, l'éther monoéthylique du diéthylèneglycol et l'éther diéthylique du diéthylèneglycol.

**Claims** (for the Contracting States : BE, CH, DE, GB, IT, LI, LU, NL, SE)

1. In all their stereo-isomeric forms, the compounds with the general formula (I)

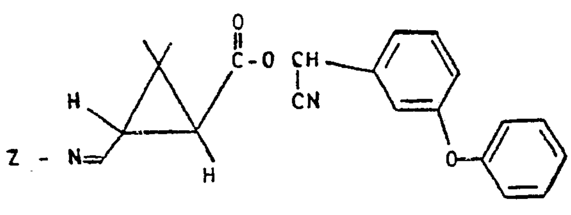

cis or trans R, S or RS
in which Z represents the organic residue of a primary amine Z—$NH_2$ and in which the acid copula can be of cis or trans configuration, racemic or optically active and the alcohol copula can be of R, S or RS configuration.

2. Compounds with the general formula (I) as defined in Claim 1 with the following names :

— (IR, cis)2,2-dimethyl-3-(phenyliminomethyl)cyclopropane-1-carboxylate of (RS) α-cyano-3-phenoxybenzyl,

— (1R, cis)2,2-dimethyl-3-(phenyliminomethyl)cyclopropane-1-carboxylate of (S) α-cyano-3-phenoxybenzyl,

— (1R, trans)2,2-dimethyl-3-(phenyliminomethyl)cyclopropane-1-carboxylate of (RS) α-cyano-3-phenoxybenzyl,

— (1R, trans)2,2-dimethyl-3-(phenyliminomethyl)cyclopropane-1-carboxylate of (S) α-cyano-3-phenoxybenzyl.

3. Preparation process for the compounds with the general formula (I) as defined in Claim 1, characterized in that a 2,2-dimethyl-3-formylcyclopropane-1-carboxylic acid in trans form ($II_1$) or a 2,2-dimethyl-3-dihydroxymethylcyclopropane-1-carboxylic acid in lactone cis form ($II_2$)

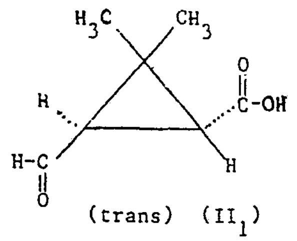

(trans) ($II_1$)

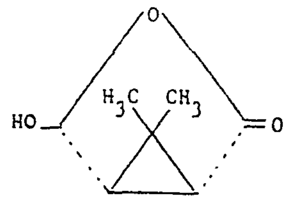

(cis) ($II_2$)

racemic or optically active, is made to react with a dehydrating reagent chosen from the group constituted by dicyclohexylcarbodiimide and diisopropylcarbodiimide, in the presence of pyridine or of 4-dimethylaminopyridine, and in a non-polar organic solvent, so as to obtain 2,2-dimethyl-3-formylcyclopropane-1-carboxylate of (cyclohexylamino) (cyclohexylimino)methyl or 2,2-dimethyl-3-formylcyclopropane-1-carboxylate of (isopropylamino) (isopropylimino)methyl respectively of which the acid copulae are of trans or cis structure, racemic or optically active, one of these compounds is submitted to the action of (RS) α-cyano-3-phenoxybenzyl alcohol (III)

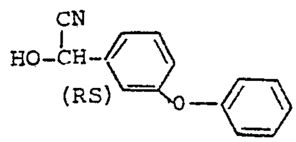

(III)

in a non-polar solvent, so as to obtain the corresponding 2,2-dimethyl-3-formylcyclopropane-1-carboxylate of (RS) α-cyano-3-phenoxybenzyl (IV)

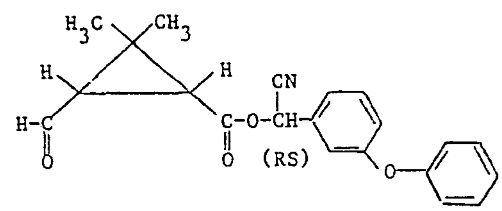

(IV)

with cis or trans structure, racemic or optically active, which ester is submitted, in a non-polar organic solvent, to the action of a primary amine with the formula Z—$NH_2$, in which Z is defined as in Claim 1, so as to obtain the corresponding 2,2-dimethyl-3-(Z-iminomethyl)cyclopropane-1-carboxylate of (RS) α-cyano-3-phenoxybenzyl ($I_A$), which, if desired, is submitted to the action of a basic agent in a solvent or in a mixture of solvents in which the alcohol ester of one of the two (R) or (S) configurations is more soluble than its diastereo-isomer, which enables, after epimerization of the asymmetric carbon of the alcohol copula, the only ester with the corresponding configuration favoured by the insolubility ($I_B$), to be obtained in crystalline form, that is to say either 2,2-dimethyl-3-(Z-iminomethyl)cyclopropane-1-carboxylate of (R) α-cyano-3-phenoxybenzyl, or 2,2-dimethyl-3-(Z-iminomethyl)cyclopropane-1-carboxylate of (S) α-cyano-3-phenoxybenzyl, the acid copula of the compounds ($I_A$) or ($I_B$) possessing the same configuration as that of the starting compound (II).

4. Process according to Claim 3, characterized in that the non-polar organic solvent in which on the one hand the aldehyde compound (II) and the dehydrating reagent and on the other hand the condensation compound and the alcohol (III) are made to react, is chosen from the group constituted by aromatic hydrocarbons, aliphatic hydrocarbons, halogenated aliphatic hydrocarbons and cyclohexane.

5. Process according to Claim 3 or 4, characterized in that the primary amine that is made to react with the compound (IV) is aniline.

6. Process according to any one of the Claims 3-5, characterized in that the non-polar organic solvent in which the primary amine and the compound (IV) are made to react, is chosen from the group constituted by aromatic hydrocarbons, aliphatic hydrocarbons, halogenated aliphatic hydrocarbons and cyclohexane.

7. Process according to any one of the Claims 3-6, characterized in that the basic agent to the action of which the alcohol ester ($I_A$) with (RS) configuration is submitted, is chosen from the group constituted by ammonia, triethylamine, diethylamine, morpholine, pyrrolidine, piperidine, diisopropylamine, ephedrine, triethylenediamine, benzylamine, n-butylamine, sec.butylamine, tertbutylammonium hydroxide, ion-exchanger resins, strongly basic in character, containing quaternary ammoniums or amines, amines of

high molecular weight and, utilized in catalytic quantity, sodium hydroxide, potassium hydroxide, alkaline alcoholates, alkaline amides, alkaline hydrides, potassium tertbutylate and sodium isopropylate

8. Process according to any one of the Claims 3-7, characterized in that the solvent or mixture of solvents in which the alcohol ester ($I_A$) with (RS) configuration is made to react with the basic agent is chosen from the group constituted by acetonitrile, alkanols and mixtures of alkanols and petroleum ethers.

9. Use of compounds (I), as defined in Claim 1, of which the alcohol copula presents an (S) or (R) configuration, (compounds $I_B$), in the preparation, in all their steroisomeric forms, of the compounds with the general formula (V)

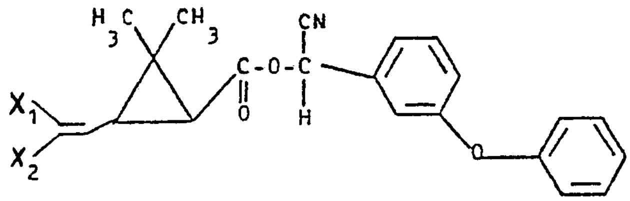

(V)

in which each of $X_1$ and $X_2$, identical or different, represents an alkyl radical with 1-4 carbon atoms, a fluoride, chloride or bromide atom, or together they represent, with the carbon atom to which they are linked a carbon homocycle with 3-7 carbon atoms or a heterocycle of

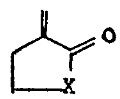

formula, in which X represents an oxygen atom or a sulphur atom, the acid copula of compounds (V) being of cis or trans structure, racemic or optically active and the alcohol copula being of (S) configuration or (R) configuration, characterized in that the compound with the formula ($I_B$) is hydrolyzed by an acid agent, so as to obtain a compound with the formula (VI)

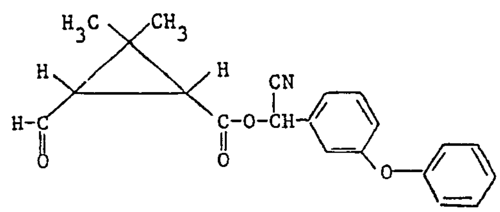

(VI)

of the same configuration as compound ($I_B$), which product with the formula (VI) is made to react in an organic solvent (Y) with a phosphorane with the formula (VII)

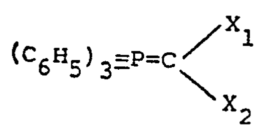

(VII)

resulting either from the action of a strong base (B) on a compound with the formula (VIII)

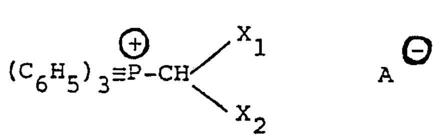

(VIII)

in which $A^{\ominus}$ represents an anion derivative of a mineral acid, or, when $X_1$ and $X_2$ represent a halogen atom, from the action in a solvent (Y) of a strong base (B) on the triphenyl phosphine and a suitable haloform, so as to obtain the desired compound (V) of which the acid copula has the same configuration as that of the starting compound ($I_B$).

10. Use according to Claim 9, characterized in that the acid agent utilized in the hydrolysis of compound ($I_B$) is chosen from the group constituted by sulphuric acid, hydrochloric acid, phosphoric acid and paratoluene sulphonic acid.

11. Use according to Claim 9 or 10, characterized in that the hydrolysis of compound ($I_B$) is carried out in the presence of an organic solvent miscible with water.

12. Use according to Claim 9, characterized in that the strong base (B) is chosen from the group constituted by alkaline hydrides, alkaline amides, alkaline alcoholates and butyl-lithium.

13. Use according to Claim 9, characterized in that the solvent (Y) is chosen from the group constituted by dimethylformamide, dimethylsulphoxide, tetrahydrofuran, ethyl ethyl ether, monoethyl ether of diethyleneglycol and diethyl ether of diethyleneglycol.

**Claims** (for the Contracting State AT)

1. Preparation process for the compounds with the general formula (V)

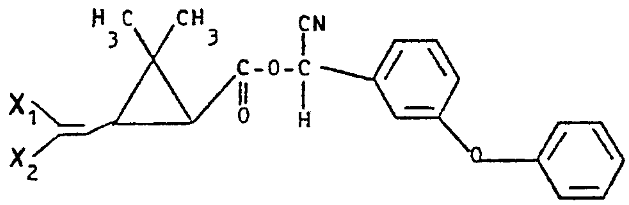

(V)

in which each of $X_1$ and $X_2$, identical or different, represents an alkyl radical with 1-4 carbon atoms, a fluoride, chloride or bromide atom, or together they represent, with the carbon atom to which they are linked, a carbon homocycle with 3-7 carbon atoms or a heterocycle with

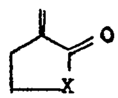

formula in which X represents an oxygen atom or a sulphur atom, the acid copula of compounds (V) being of cis or trans structure, racemic or optically active, and the alcohol copula being of (S) configuration or (R) configuration, characterized in that a 2,2-dimethyl-3-formylcyclopropane-1-carboxylic acid in trans ($II_1$) or in the form of a cis lactone of a 2,2-dimethyl-3-dihydroxymethylcyclopropane-1-carboxylic acid ($II_2$),

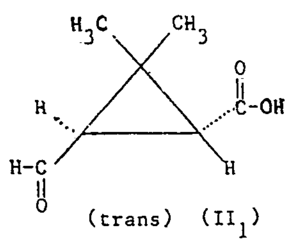

(trans) ($II_1$)

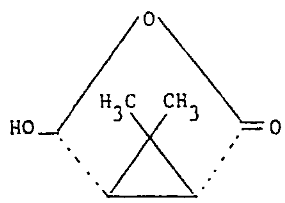

(cis) ($II_2$)

racemic or optically active, is made to react with a dehydrating reagent chosen from the group constituted by dicyclohexyl carbodiimide and diisopropyl carbodiimide, in the presence of pyridine or of 4-dimethyl aminopyridine, and in a non-polar organic solvent, so as to obtain 2,2-dimethyl-3-formylcyclopropane-1-carboxylate of (cyclohexylamino) (cyclohexylimino)methyl or 2,2-dimethyl-3-formylcyclopropane-1-carboxylate of (isopropylamino) (isopropylimino)methyl respectively, of which the acid copulae are of trans or cis structure, racemic or optically active, one of these compounds is submitted to the action of (RS) α-cyano-3-phenoxybenzyl alcohol (III)

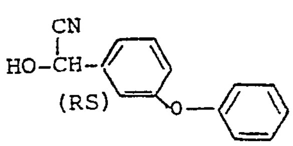

(III)

in a non-polar solvent, so as to obtain the corresponding 2,2-dimethyl-3-formylcyclopropane-1-carboxylate of (RS) α-cyano-3-phenoxybenzyl (IV)

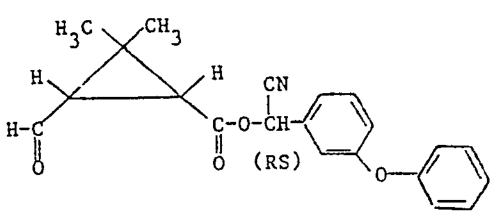

(IV)

with cis or trans structure, racemic or optically active, this ester is submitted, in a non-polar organic solvent, to the action of a primary amine with the formula Z—$NH_2$, in which Z represents the organic residue of a primary amine Z—$NH_2$, so as to obtain the corresponding 2,2-dimethyl-3-(Z-iminomethyl)cyclopropane-1-carboxylate of (RS) α-cyano-3-phenoxybenzyl ($I_A$) which is submitted to the action of a basic agent in a solvent or mixture of solvents in which the alcohol ester of one of the two configurations (R) or (S) is more soluble than its diastereo-isomer, which enables, after epimerization of the asymmetric carbon of the alcohol copula, the only ester with the corresponding configuration favoured by the insolubility ($I_B$), to be obtained, in crystalline form, that is to say either 2,2-dimethyl-3-(Z-iminomethyl)cyclopropane-1-carboxylate of (R) α-cyano-3-phenoxybenzyl, or 2,2-dimethyl-3-(Z-iminomethyl)cyclopropane-1-carboxylate of (S) α-cyano-3-phenoxybenzyl, the acid copula of compounds ($I_A$) or ($I_B$) possessing the same configuration as that of the starting compound II, the compound with the formula ($I_B$) is then hydrolyzed by an acid agent so as to obtain a compound with the formula (VI)

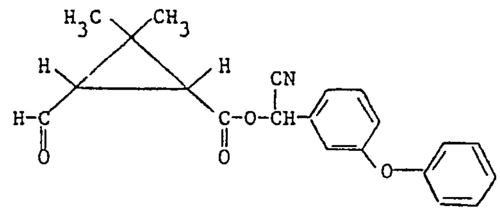

(VI)

with the same configuration as compound ($I_B$), which product with the formula (VI), is made to react, in an organic solvent (Y), with a phosphorane with the formula (VII)

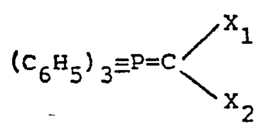

(VII)

resulting either from the action of a strong base (B) on a compound with the formula (VIII)

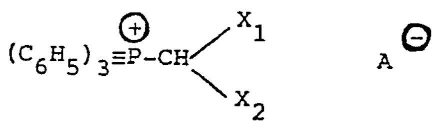

(VIII)

in which $A^{\ominus}$ represents an anion derivative of a mineral acid, or, when $X_1$ and $X_2$ represent halogen atoms, from the action in a solvent (Y) of a strong base (B) on the triphenyl phosphine and a suitable haloform, so as to obtain the desired compound (V) of which the acid copula has the same configuration as that of the starting compound ($I_B$).

2. Process according to Claim 1, characterized in that the non-polar organic solvent in which, on the one hand the aldehyde compound (II) and the dehydrating reagent and on the other hand the condensation compound and alcohol (III) are made to react, is chosen from the group constituted by aromatic hydrocarbons, aliphatic hydrocarbons, halogenated aliphatic hydrocarbons and cyclohexane.

3. Process according to Claim 1 or 2, characterized in that the primary amine that is made to react with the compound (IV) is aniline.

4. Process according to any one of the Claims 1-3, characterized in that the non-polar organic solvent in which the primary amine and the compound (IV) are made to react is chosen from the group constituted by the aromatic hydrocarbons, aliphatic hydrocarbons, halogenated aliphatic hydrocarbons and cyclohexane.

5. Process according to any one of the Claims 1-4, characterized in that the basic agent to the action of which alcohol ester ($I_A$) with (RS) configuration is submitted, is chosen from the group constituted by ammonia, triethylamine, diethylamine, morpholine, pyrrolidine, piperidine, diisopropylamine, ephedrine, triethylenediamine, benzylamine, n-butylamine, sec.butylamine, tetrabutylammonium hydroxide, ion-exchanger resins, strongly basic with quaternary ammoniums or amines, amines of high molecular weight and, utilized in catalytic quantity, sodium hydroxide, potassium hydroxide, alkaline alcoholates, alkaline amides, alkaline hydrides, potassium tertbutylate and sodium isopropylate.

6. Process according to any one of the Claims 1-5, characterized in that the solvent or mixture of solvents in which alcohol ester ($I_A$) with (RS) configuration is made to react with a basic agent, is chosen from the group constituted by acetonitrile, alkanols and mixtures of alkanols and petroleum ethers.

7. Process according to any one of the Claims 1-6, characterized in that the acid agent utilized in the hydrolysis of compound ($I_B$) is chosen from the group constituted by sulphuric acid, hydrochloric acid, phosphoric acid and paratoluene sulphonic acid.

8. Process according to any one of the Claims 1-7, characterized in that the hydrolysis of compound ($I_B$) is carried out in the presence of an organic solvent miscible with water.

9. Process according to any one of the Claims 1-8, characterized in that the strong base (B) is chosen from the group constituted by alkaline hydrides, alkaline amides, alkaline alcoholates and butyl-lithium.

10. Use according to any one of the Claims 1-9, characterized in that the solvent (Y) is chosen from the group constituted by dimethylformamide, dimethylsulphoxide, tetrahydrofuran, ethyl ether, monoethyl ether of diethyleneglycol and diethyl ether of diethyleneglycol.

**Ansprüche** (für die Vertragsstaaten : BE, CH, DE, GB, IT, LI, LU, NL, SE)

1. In sämtlichen ihrer stereoisomeren Formen die Verbindungen der allgemeinen Formel (I)

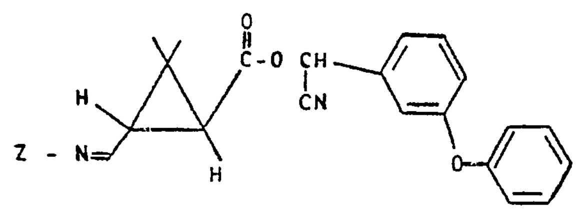

cis oder trans, R, S oder RS
worin Z den organischen Rest eines primären Amins Z—$NH_2$ darstellt und worin die Säureverknüpfung racemische oder optisch aktive cis- oder trans-Konfiguration aufweisen kann und die Alkoholverknüpfung die Konfiguration R, S oder RS besitzen kann.

2. Die Verbindungen der allgemeinen Formel I gemäß Anspruch 1 mit den folgenden Bezeichnungen :

— (RS)-α-Cyano-3-phenoxybenzyl-(1R-cis)-2,2-dimethyl-3-(phenyliminomethyl)-cyclopropan-1-carboxylat,

— (S)-α-Cyano-3-phenoxybenzyl-(1R-cis)-2,2-dimethyl-3-(phenyliminomethyl)-cyclopropan-1-carboxylat

— (RS)-α-Cyano-3-phenoxybenzyl-(1R-trans)-2,2-dimethyl-3-(phenyliminomethyl)-cyclopropan-1-carboxylat

— (S)-α-Cyano-3-phenoxybenzyl-(1R-trans)-2,2-dimethyl-3-(phenyliminomethyl)-cyclopropan-1-carboxylat.

3. Verfahren zur Herstellung von Verbindungen der allgemeinen Formel (I) gemäß Anspruch 1, dadurch gekennzeichnet, daß man eine 2,2-Dimethyl-3-formylcyclopropan-1-carbonsäure in der trans-Form ($II_1$) oder in Form des cis-Lactons einer 2,2-Dimethyl-3-dihydroxymethyl-cyclopropan-1-carbonsäure ($II_2$)

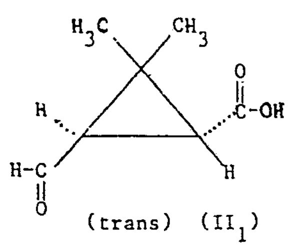

(trans) ($II_1$)

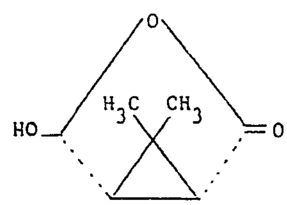

(cis) ($II_2$)

in racemischer oder optisch aktiver Form mit einem Dehydratationsreagens, ausgewählt unter Dicyclohexylcarbodiimid und Diisopropylcarbodiimid, in Gegenwart von Pyridin oder 4-Dimethylaminopyridin und in dem Medium eines nichtpolaren, organischen Lösungsmittels umsetzt, um das (Cyclohexylamino)-(cyclohexylimino)-methyl-2,2-dimethyl-3-formyl-cyclopropan-1-carboxylat oder das (Isopropylamino)-(isopropylimino)-methyl-2,2-dimethyl-3-formyl-cyclopropan-1-carboxylat, deren racemische oder optisch aktive Säureverknüpfungen trans- oder cis-Struktur aufweisen, zu erhalten, eine dieser Verbindungen der Einwirkung des (RS)-α-Cyano-3-phenoxybenzylalkohols (III)

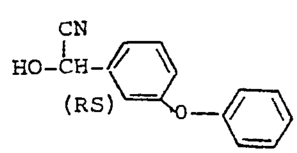

(III)

in dem Medium eines nichtpolaren Lösungsmittels unterzieht, um das entsprechende (RS)-α-Cyano-3-phenoxybenzyl-2,2-dimethyl-3-formyl-cyclopropan-1-carboxylat (IV)

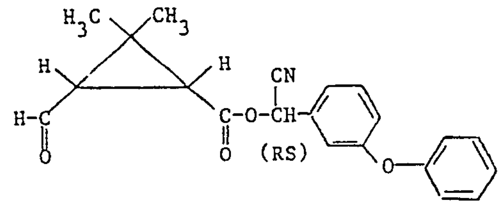

(IV)

in racemischer oder optisch aktiver Form mit cis- oder trans-Struktur zu erhalten, in dem Medium eines nichtpolaren, organischen Lösungsmittels diesen Ester der Einwirkung eines primären Amins der Formel Z—$NH_2$ unterzieht, worin Z wie in Anspruch 1 definiert ist, um das entsprechende (RS)-α-Cyano-3-phenoxybenzyl-2,2-dimethyl-3-(Z-iminomethyl)-cyclopropan-1-carboxylat ($I_A$) zu erhalten, das man gewünschtenfalls der Einwirkung eines basischen Mittels in dem Medium eines Lösungsmittels oder eines Gemisches von Lösungsmitteln, worin der Ester des Alkohols einer der beiden Konfigurationen (R) oder (S) löslicher ist als sein Diastereoisomeres, unterzieht, wodurch es ermöglicht wird, nach der Epimerisierung des asymmetrischen Kohlenstoffatoms der Alkoholverknüpfung in kristalliner Form den entsprechenden einzigen Ester ($I_B$) mit der durch die Unlöslichkeit begünstigten Konfiguration zu erhalten, nämlich entweder das (R)-α-Cyano-3-phenoxybenzyl-2,2-dimethyl-3-(Z-iminomethyl)-cyclopropan-1-carboxylat oder das (S)-α-Cyano-3-phenoxybenzyl-2,2-dimethyl-3-(Z-iminomethyl)-cyclopropan-1-carboxylat, wobei die Säureverknüpfung der Verbindungen ($I_A$) oder ($I_B$) die gleiche Konfiguration besitzt wie diejenige der Ausgangsverbindung (II).

4. Verfahren gemäß Anspruch 3, dadurch gekennzeichnet, daß das nichtpolare, organische Lösungsmittel, in dessen Medium man einesteils die Aldehydverbindung (II) und das Dehydratationsreagens und anderenteils die Verbindung der Kondensation and den Alkohol (III) umsetzt, ausgewählt wird unter den aromatischen Kohlenwasserstoffen, den aliphatischen Kohlenwasserstoffen, den halogenierten, aliphatischen Kohlenwasserstoffen und dem Cyclohexan.

5. Verfahren gemäß Anspruch 3 oder 4, dadurch gekennzeichnet, daß das primäre Amin, das man mit der Verbindung (IV) umsetzt, Anilin ist.

6. Verfahren gemäß einem der Ansprüche 3 bis 5, dadurch gekennzeichnet, daß das nichtpolare, organische Lösungsmittel, in dessen Medium man das primäre Amin und die Verbindung (IV) umsetzt, unter den aromatischen Kohlenwasserstoffen, den aliphatischen Kohlenwasserstoffen, den halogenierten, aliphatischen Kohlenwasserstoffen und dem Cyclohexan ausgewählt wird.

7. Verfahren gemäß einem der Ansprüche 3 bis 6, dadurch gekennzeichnet, daß das basische Mittel, dessen Einwirkung man den Ester ($I_A$) des Alkohols mit der Konfiguration (RS) unterzieht, unter Ammoniak, Triethylamin, Diethylamin, Morpholin, Pyrrolidin, Piperidin, Diisopropylamin, Ephedrin, Triethylendiamin, Benzylamin, n-Butylamin, sek.-Butylamin, Tetrabutylammoniumhydroxid, den Ionenaustauscherharzen mit stark basischem Charakter, die quaternären Ammoniumreste oder Amine enthalten, den Aminen mit hohem Molekulargewicht und, in katalytischer Menge verwendet, der Natronlauge, Kalilauge, den Alkalialkoholaten, den Alkaliamiden, den Alkalihydridren, dem Kalium-tert.-butylat und dem Natriumisopropylat ausgewählt wird.

8. Verfahren gemäß einem der Ansprüche 3 bis 7, dadurch gekennzeichnet, daß das Lösungsmittel oder das Gemisch der Lösungsmittel, in dessen Medium man den Ester ($I_A$) des Alkohols mit der Konfiguration (RS) mit dem basischen Mittel umsetzt, unter Acetonitril, den Alkanolen und den Gemischen von Alkanolen und Petrolethern ausgewählt wird.

9. Verwendung der Verbindungen (I) gemäß Anspruch 1, deren Alkoholverknüpfung eine (S)- oder (R)-Konfiguration aufweist (Verbindungen $I_B$), zur Herstellung in sämtlichen ihrer stereoisomeren Formen der Verbindungen der allgemeinen Formel (V)

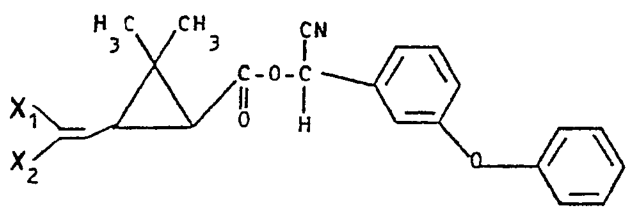

(V)

worin $X_1$ und $X_2$, die gleich oder verschieden sein können, einen Alkylrest mit 1 bis 4 Kohlenstoffatomen, ein Fluor-, Chlor- oder Bromatom darstellen oder gemeinsam mit dem Kohlenstoffatom, an das sie gebunden sind, einen Kohlenstoffhomocyclus mit 3 bis 7 Kohlenstoffatomen oder einen Heterocyclus der Formel

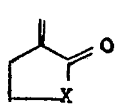

bilden, worin X ein Sauerstoff- oder Schwefelatom bedeutet, wobei die Säureverknüpfung der Verbindungen (V) racemisch oder optisch aktiv mit cis- oder trans-Struktur sein kann und die Alkoholverknüpfung die Konfiguration (S) oder die Konfiguration (R) aufweisen kann, dadurch gekennzeichnet, daß man die Verbindung der Formel ($I_B$) einer Hydrolyse mit Hilfe eines sauren Mittels unterzieht, um eine Verbindung der Formel (VI)

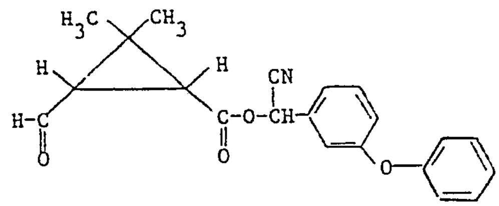

(VI)

mit der gleichen Konfiguration wie die Verbindung ($I_B$) zu erhalten, welches Produkt der Formel (VI) man in dem Medium eines organischen Lösungsmittels (Y) mit einem Phosphoran der Formel (VII)

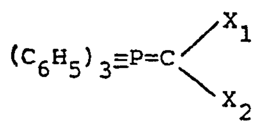

(VII)

das entweder der Umsetzung einer starken Base (B) mit einer Verbindung der Formel (VIII)

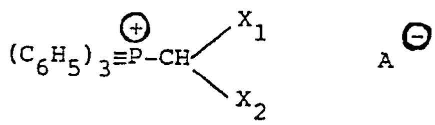

(VIII)

worin $A^{\ominus}$ ein sich von einer Mineralsäure ableitendes Anion darstellt, oder, wenn $X_1$ und $X_2$ ein Halogenatom bedeuten, der Umsetzung in dem Medium eines Lösungsmittels (Y) einer starken Base (B) mit Triphenylphosphin und einem geeigneten Haloform entstammt, umsetzt, um die gewünschte Verbindung (V) zu erhalten, deren Säureverknüpfung die gleiche Konfiguration besitzt wie diejenige der Ausgangsverbindung ($I_B$).

10. Verwendung gemäß Anspruch 9, dadurch gekennzeichnet, daß das bei der Hydrolyse der Verbindung ($I_B$) verwendete, saure Mittel unter Schwefelsäure, Chlorwasserstoffsäure, Phosphorsäure und p-Toluolsulfonsäure ausgewählt wird.

11. Verwendung gemäß Anspruch 9 oder 10, dadurch gekennzeichnet, daß die Hydrolyse der Verbindung ($I_B$) in Gegenwart eines mit Wasser mischbaren, organischen Lösungsmittels durchgeführt wird.

12. Verwendung gemäß Anspruch 9, dadurch gekennzeichnet, daß die starke Base (B) unter den Alkalihydriden, den Alkaliamiden, den Alkalialkoholaten und Butyllithium ausgewählt wird.

13. Verwendung gemäß Anspruch 9, dadurch gekennzeichnet, daß das Lösungsmittel (Y) unter Dimethylformamid, Dimethylsulfoxid, Tetrahydrofuran, Ethylether, Diethylenglykol-monoethylether und Diethylenglykol-diethylether ausgewählt wird.

**Ansprüche** (für den Vertragsstaat AT)

1. Verfahren zur Herstellung der Verbindungen der allgemeinen Formel (V)

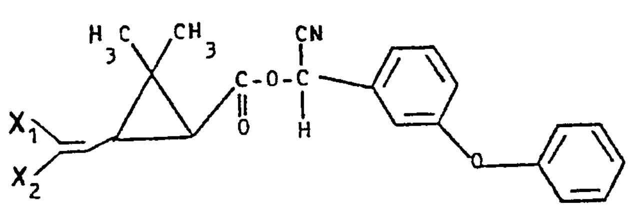

(V)

worin $X_1$ und $X_2$, die gleich oder verschieden sein können, einen Alkylrest mit 1 bis 4 Kohlenstoffatomen, ein Fluor-, Chlor- oder Bromatom bedeuten oder gemeinsam mit dem Kohlenstoffatom, an das sie gebunden sind, einen Kohlenstoffhomocyclus mit 3 bis 7 Kohlenstoffatomen oder einen Heterocyclus der Formel

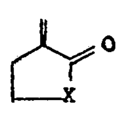

worin X ein Sauerstoff- oder Schwefelatom bedeutet, bilden, wobei die Säureverknüpfung der Verbindungen (V) racemische oder optische cis- oder trans-Struktur aufweisen kann und die Alkoholverknüpfung die Konfiguration (S) oder die Konfiguration (R) besitzt, dadurch gekennzeichnet, daß man eine 2,2-Dimethyl-3-formylcyclopropan-1-carbonsäure in der trans-Form ($II_1$) oder in Form des cis-Lactons einer 2,2-Dimethyl-3-dihydroxymethyl-cyclopropan-1-carbonsäure ($II_2$)

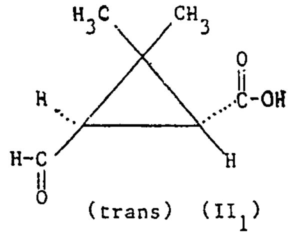

(trans) ($II_1$)

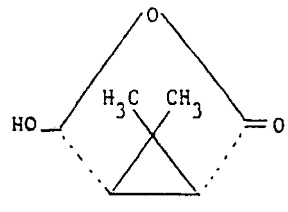

(cis) ($II_2$)

in racemischer oder optisch aktiver Form mit einem Dehydratationsmittel, ausgewählt unter Dicyclohexylcarbodiimid und Diisopropylcarbodiimid, in Gegenwart von Pyridin oder 4-Dimethylaminopyridin und in dem Medium eines nichtpolaren, organischen Lösungsmittels umsetzt, um das (Cyclohexylamino)-(cyclohexylimino)-methyl-2,2-dimethyl-3-formyl-cyclopropan-1-carboxylat oder das (Isopropylamino)-(isopropylimino)-methyl-2,2-dimethyl-3-formyl-cyclopropan-1-carboxylat zu erhalten, deren racemische oder optisch aktive Säureverknüpfungen trans- oder cis-Struktur aufweisen, eine dieser Verbindungen der Einwirkung des (RS)-α-Cyano-3-phenoxybenzylalkohols (III)

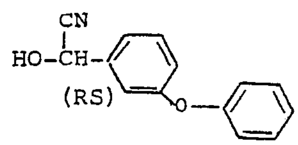

(III)

in dem Medium eines nichtpolaren Lösungsmittels unterzieht, um das entsprechende (RS)-α-Cyano-3-phenoxybenzyl-2,2-dimethyl-3-formyl-cyclopropan-1-carboxylat (IV)

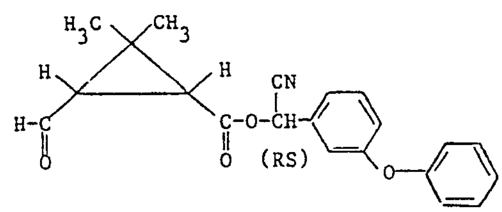

(IV)

mit cis- oder trans-Struktur in racemischer oder optisch aktiver Form zu erhalten, in dem Medium eines nichtpolaren, organischen Lösungsmittels diesen Ester der Einwirkung eines primären Amins der Formel Z—$NH_2$, worin Z den organischen Rest eines primären Amins Z—$NH_2$ bedeutet, unterzieht, um das entsprechende (RS)-α-Cyano-3-phenoxybenzyl-2,2-dimethyl-3-(Z-iminomethyl)-cyclopropan-1-carboxylat ($I_A$) zu erhalten, das man der Einwirkung eines basischen Mittels in dem Medium eines Lösungsmittels oder eines Gemisches von Lösungsmitteln, worin der Ester des Alkohols mit einer der beiden Konfigurationen (R) oder (S) löslicher ist als sein Diastereoisomeres, unterzieht, wodurch es möglich wird, nach der Epimerisierung des asymmetrischen Kohlenstoffatoms der Alkoholverknüpfung in kristalliner Form den entsprechenden, alleinigen Ester ($I_B$) mit der durch die Unlöslichkeit begünstigten Konfiguration zu erhalten, nämlich entweder das (R)-α-Cyano-3-phenoxybenzyl-2,2-dimethyl-3-(Z-iminomethyl)-cyclopropan-1-carboxylat oder das (S)-α-Cyano-3-phenoxybenzyl-2,2-dimethyl-3-(Z-iminomethyl)-cyclopropan-1-carboxylat, wobei die Säureverknüpfung der Verbindungen ($I_A$) oder ($I_B$) die gleiche Konfiguration besitzt wie diejenige der Ausgangsverbindung (II), anschließend die Verbindung der Formel ($I_B$) einer Hydrolyse mit Hilfe eines sauren Mittels unterzieht, um eine Verbindung der Formel (VI)

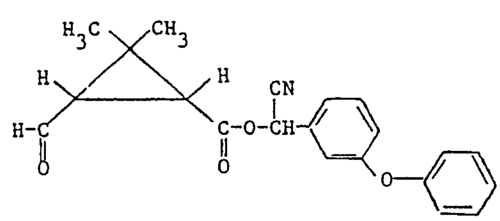

(VI)

mit der gleichen Konfiguration wie die Verbindung ($I_B$) zu erhalten, welches Produkt der Formel (VI) man in dem Medium eines organischen Lösungsmittels (Y) mit einem Phosphoran der Formel (VII)

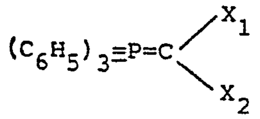

(VII)

das entweder der Einwirkung einer starken Base (B) mit einer Verbindung der Formel (VIII)

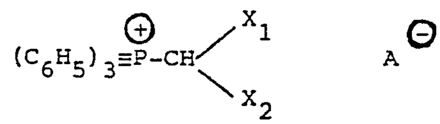

(VIII)

worin $A^{\ominus}$ ein sich von einer Mineralsäure ableitendes Anion darstellt, oder, wenn $X_1$ und $X_2$ ein Halogenatom bedeuten, der Einwirkung in dem Medium eines Lösungsmittels (Y) einer starken Base (B) mit Triphenylphosphin und einem geeigneten Haloform entstammt, umsetzt, um die gewünschte Verbindung (V), deren Säureverknüpfung die gleiche Konfiguration wie diejenige der Ausgangsverbindung ($I_B$) aufweist, zu erhalten.

2. Verfahren gemäß Anspruch 1, dadurch gekennzeichnet, daß das nichtpolare, organische Lösungsmittel, in dessen Medium man einesteils die Aldehydverbindung (II) und das Dehydratationsreagens und anderenteils die Verbindung der Kondensation und den Alkohol (III) umsetzt, unter den aromatischen Kohlenwasserstoffen, den aliphatischen Kohlenwasserstoffen, den halogenierten, aliphatischen Kohlenwasserstoffen und dem Cyclohexan ausgewählt wird.

3. Verfahren gemäß Anspruch 1 oder 2, dadurch gekennzeichnet, daß das primäre Amin, das man mit der Verbindung (IV) umsetzt, Anilin ist.

4. Verfahren gemäß einem der Ansprüche 1 bis 3, dadurch gekennzeichnet, daß das nichtpolare, organische Lösungsmittel, in dessen Medium man das primäre Amin und die Verbindung (IV) umsetzt, unter den aromatischen Kohlenwasserstoffen, den aliphatischen Kohlenwasserstoffen, den halogenierten, aliphatischen Kohlenwasserstoffen und dem Cyclohexan ausgewählt wird.

5. Verfahren gemäß einem der Ansprüche 1 bis 4, dadurch gekennzeichnet, daß das basische Mittel, dessen Einwirkung man den Ester ($I_A$) des Alkohols mit Konfiguration (RS) unterzieht, unter Ammoniak, Triethylamin, Diethylamin, Morpholin, Pyrrolidin, Piperidin, Diisopropylamin, Ephedrin, Triethylendiamin, Benzylamin, n-Butylamin, sek.-Butylamin, Tetrabutylammoniumhydroxid, den Ionenaustauscherharzen mit stark basischem Charakter, die quaternäre Ammoniumreste oder Amine aufweisen, den Aminen mit hohem Molekulargewicht und, verwendet in katalytischer Menge, der Natronlauge, Kalilauge, den Alkalialkoholaten, den Alkaliamiden, den Alkalihydriden, dem Kalium-tert.-butylat und dem Natriumisopropylat ausgewählt wird.

6. Verfahren gemäß einem der Ansprüche 1 bis 5, dadurch gekennzeichnet, daß das Lösungsmittel oder das Gemisch der Lösungsmittel, in deren Medium man den Ester ($I_A$) des Alkohols mit der Konfiguration (RS) mit dem basischen Mittel umsetzt, unter Acetonitril, den Alkanolen und den Gemischen von Alkanolen und Petrolethern ausgewählt wird.

7. Verfahren gemäß einem der Ansprüche 1 bis 6, dadurch gekennzeichnet, daß das bei der Hydrolyse der Verbindung ($I_B$) verwendete, saure Mittel unter Schwefelsäure, Chlorwasserstoffsäure, Phosphorsäure und p-Toluolsulfonsäure ausgewählt wird.

8. Verfahren gemäß einem der Ansprüche 1 bis 7, dadurch gekennzeichnet, daß die Hydrolyse der Verbindung ($I_B$) in Gegenwart eines mit Wasser mischbaren, organischen Lösungsmittels durchgeführt wird.

9. Verfahren gemäß einem der Ansprüche 1 bis 8, dadurch gekennzeichnet, daß die starke Base (B) unter den Alkalihydriden, den Alkaliamiden, den Alkalialkoholaten und Butyllithium ausgewählt wird.

10. Verfahren gemäß einem der Ansprüche 1 bis 9, dadurch gekennzeichnet, daß das Lösungsmittel (Y) unter Dimethylformamid, Dimethylsulfoxid, Tetrahydrofuran, Ethylether, Diethylenglykol-monoethylether und Diethylenglykol-diethylether ausgewählt wird.